# EUROPÄISCHE PATENTANMELDUNG

(11) **EP 1 336 732 A1**
(43) Veröffentlichungstag der Anmeldung: **20.08.2003**
(21) Anmeldenummer: 02027723.2
(22) Anmeldetag: 11.12.2002
(51) Int. Cl.: F01N 3/28

(54) **Lagerung eines Keramikmonolithen in einem Blechgehäuse z.B. bei Katalysatoren oder Partikelfiltern**

(30) Priorität: 13.02.2002 DE 10205856
(71) Anmelder: J. Eberspächer GmbH & Co. KG, 73730 Esslingen (DE)
(72) Erfinder: Wirth, Georg, 73230 Kirchheim/Teck (DE); Wenz, Marco, 73730 Esslingen (DE); Müller, Bernd, 57350 Schöneck (FR); Zacke, Peter, Dr., 73095 Albershausen (DE)

(57) **Zusammenfassung**

Die vorliegende Erfindung betrifft ein Lagermaterial (4) zum Umhüllen eines Keramikmonolithen (3) zu dessen Lagerung in einem Blechgehäuse, insbesondere bei einem Katalysator oder bei einem Partikelfilter. Das Lagermaterial (4) ist schnurförmig ausgebildet und im Querschnitt so dimensioniert, dass es zum Umhüllen des Keramikmonolithen (3) mit mehreren Windungen (5) schraubenförmig auf diesen aufwickelbar ist.

## Beschreibung

Die vorliegende Erfindung betrifft im weiteren Sinne die Lagerung eines Keramikmonolithen eines Bauteils in einem Blechgehäuse des Bauteils, wobei der Keramikmonolith für seine Lagerung im Blechgehäuse mit einem Lagermaterial umhüllt ist. Das mit dem Keramikmonolithen ausgestattete Bauteil ist üblicherweise ein Bestandteil einer Abgasanlage einer Brennkraftmaschine, insbesondere eines Kraftfahrzeugs, und kann beispielsweise durch einen Katalysator oder durch ein Partikelfilter, z.B. Rußfilter gebildet sein.

Da einerseits der Keramikmonolith und das Blechgehäuse unterschiedliche Temperaturausdehnungskoeffizienten besitzen und da andererseits in einer Abgasanlage einer Brennkraftmaschine relativ hohe Temperaturen auftreten können, kommt es zu unterschiedlichen Wärmedehnungen zwischen Keramikmonolith und Blechgehäuse. Deshalb ist es erforderlich, den Keramikmonolithen über ein Lagermaterial im Blechgehäuse zu haltern, das die unterschiedlichen Wärmedehnungen kompensieren kann. Das hierzu verwendete Lagermaterial ist üblicherweise passend zum jeweiligen Keramikmonolithen aus einer Quellmaterialbahn oder aus einer Keramikfaserbahn mattenförmig zugeschnitten. Der Zuschnitt dieser Lagermatte erfolgt dabei so, daß die Lagermatte den Keramikmonolithen entlang seiner gesamten Länge in der Umfangsrichtung einlagig umhüllt, wobei die Enden der Lagermatte in der Umfangsrichtung aneinander stoßen.

Aufgrund von Fertigungstoleranzen kann es dazu kommen, daß die zugeschnittenen Lagermatten in Umfangsrichtung nicht exakt die erforderliche Länge zum Umhüllen des Keramikmonolithen besitzen. Demzufolge kann es beim Einbau des umhüllten Keramikmonolithen in das Blechgehäuse zu Materialfaltungen oder zu einem Spalt an den Stoßenden kommen. Während Materialdoppelungen zu einer erhöhten Pressung mit der Gefahr einer Beschädigung des Keramikmonolithen führen, ermöglicht ein Spalt an den Stoßenden eine unerwünschte Bypassströmung sowie eine erhöhte Wärmeabstrahlung an das Blechgehäuse.

Aufgrund der Herstellungstoleranzen erfolgt das Einhüllen der Keramikmonolithen mit der Lagermatte bislang manuell, da hierdurch die auftretenden Toleranzkonfigurationen individuell gehandhabt werden können. Um beim Umgang mit den faserhaltigen Lagermaterialien eine Gesundheitsgefährdung der Monteure zu vermeiden, ist es erforderlich, die Lagermaterialien mit einem Bindemittel herzustellen, wodurch für die Fasermaterialien erhöhte Kosten anfallen.

Die Lagermatten werden für jede Größe und für jede Form der Keramikmonolithen als individuelle Zuschnitte hergestellt und bevorratet. Bei einer Stückzahländerung und/oder bei einer Umstellung auf einen anderen Keramikmonolith-Typ kann es daher häufig vorkommen, daß fertig zugeschnittene Lagermatten übrig bleiben und nicht mehr verwendet werden können.

Die vorliegende Erfindung beschäftigt sich mit dem Problem, für die Lagerung eines Keramikmonolithen in einem Blechgehäuse einen vorteilhaften Weg aufzuzeigen, der insbesondere die Anpassung des Lagermaterials an unterschiedliche Keramikmonolith-Typen erleichtert.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, das Lagermaterial bandförmig oder schnurförmig auszubilden, so daß es mit mehreren Windungen schraubenförmig auf den Keramikmonolithen aufwickelbar ist, um dadurch die für die Lagerung erforderliche Umhüllung zu bilden. Bei der Erfindung wird somit das Lagermaterial quasi als Endlosmaterial in Form einer Schnur oder eines Bands aus dem Lagermaterial bereitgestellt, wobei sich das Lagermaterial beim Aufwickeln auf den Keramikmonolithen von selbst an die Größe und die Form des Keramikmonolithen anpaßt. Formtoleranzen, sich ändernde Keramikmonolith-Typen und Stückzahländerungen haben bei der erfindungsgemäßen Lösung keine oder nur noch eine untergeordnete Bedeutung für die Bereitstellung einer passenden Umhüllung für den Keramikmonolithen. Des weiteren können auch bei Typenänderungen keine Reste entstehen. Darüber hinaus eignet sich die erfindungsgemäße Lösung in besonderer Weise für eine Automatisierung der Herstellung, da Toleranzprobleme, die eine individuelle Handhabung des Lagermaterial beim Umhüllen des Keramikmonolithen erforderlich machen, hier nicht auftreten. Bei einer automatisierten Herstellung kann durch geeignete Maßnahmen eine Kontaktierung des Bedienpersonals mit den Fasern des Lagermaterials vermieden werden, beispielsweise kann eine entsprechende Absaugeinrichtung vorgesehen sein. Dementsprechend ist es möglich, beim Lagermaterial auf Bindemittel zu verzichten, so daß preiswertere Lagermaterialien verwendet werden können.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder funktional gleiche oder ähnliche Bauteile beziehen.

Es zeigen, jeweils schematisch,
- Fig. 1: einen Querschnitt durch ein Bauteil, bei dem ein Keramikmonolith mit Hilfe von Lagermaterial in einem Blechgehäuse gelagert ist,
- Fig. 2: eine Seitenansicht auf einen Keramikmonolithen, der mit Lagermaterial umhüllt ist,
- Fig. 3: ein vereinfachter Längsschnitt durch einen mit Lagermaterial umhüllten Keramikmonolithen vor dem Einsetzen in ein Blechgehäuse,
- Fig. 4: eine Ansicht wie in Fig. 3, jedoch nach dem Einsetzen in das Blechgehäuse,
- Fig. 5 bis 8: Ansichten wie in Fig. 2, jedoch bei anderen Ausführungsformen,
- Fig. 9: eine stark vereinfachte Isometriedarstellung einer Vorrichtung zum Zusammenbau eines Bauteils, das einen mit Lagermaterial umhüllten Keramikmonolithen enthält.

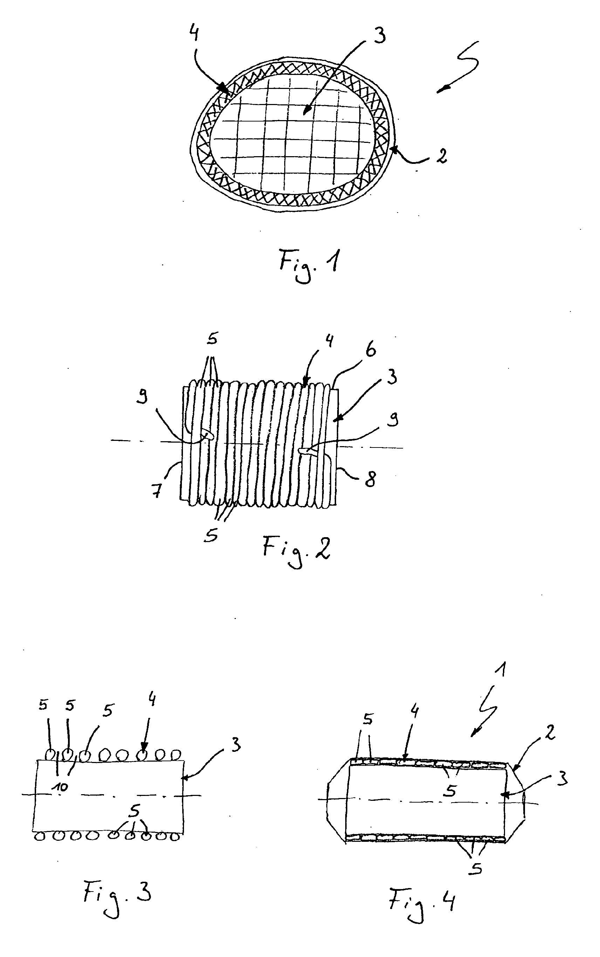

Entsprechend Fig. 1 besitzt ein Bauteil 1 ein Blechgehäuse 2, in das ein Keramikmonolith 3 eingesetzt ist. Dabei ist der Keramikmonolith 3 von einem Lagermaterial 4 umhüllt, so daß der Keramikmonolith 3 über das Lagermaterial 4 im Blechgehäuse 2 gehaltert bzw. gelagert ist. Bei dem Bauteil 1 handelt es sich beispielsweise um den Bestandteil einer Abgasanlage einer Brennkraftmaschine, insbesondere eines Kraftfahrzeugs. Das Bauteil 1 kann insbesondere einen Katalysator oder ein Partikelfilter, z.B. Rußfilter, bilden. Der Keramikmonolith 3 ist dann vom Abgas der Brennkraftmaschine durchströmbar ausgebildet. Das Lagermaterial 4 ist aus keramischen Fasern oder aus einem geeigneten Quellmaterial hergestellt.

Entsprechend den Fig. 2 bis 9 ist das Lagermaterial 4 entsprechend der vorliegenden Erfindung bandförmig oder schnurförmig ausgebildet. Die Dimensionierung des Querschnitts dieser Lagerschnur oder dieses Lagerbands ist dabei so gewählt, daß das Lagermaterial 4 mit mehreren Windungen 5 schraubenförmig auf den Keramikmonolithen 3 aufgewickelt ist bzw. aufwickelbar ist, um die Umhüllung des Keramikmonolithen 3 mit dem Lagermaterial 4 zu erhalten. Es ist klar, daß die Umhüllung des Keramikmonolithen 3 mit dem Lagermaterial 4 im wesentlichen nur an dessen Mantelfläche 6 und nicht an dessen Stirnseiten 7 und 8 erfolgt. Im vorliegenden Fall ist die Mantelfläche 6 im wesentlichen radial angeordnet, während die Stirnseiten 7, 8 die axialen Enden des Keramikmonolithen 3 bilden. An den Stirnseiten 7, 8 erfolgt z.B. die Durchströmung des Keramikmonolithen 3 mit Abgas.

Sofern das Lagermaterial 4 in Bandform vorliegt, ist es zweckmäßig durch einen Zuschnitt aus einer Quellmaterialbahn oder aus einer Keramikfaserbahn hergestellt. Sofern das Lagermaterial 4 in Schnurform vorliegt, ist es zweckmäßig durch ein Geflecht oder Gewirk aus Keramikfaserfilamenten hergestellt. Zweckmäßig werden hierzu Keramikfaserfilamente mit einer hohen Elastizität, z.B. Aluminiumoxydfasern, verwendet.

Entsprechend Fig. 2 können zur Fixierung des Lagermaterials 4 am Keramikmonolithen 3 Enden 9 des hier schnurförmig ausgebildeten Lagermaterials 4 jeweils unter einer oder mehreren benachbarten Wicklungen 5 durchgezogen sein. Hierdurch wird das jeweilige Ende 9 von der darüber gespannten Wicklung 5 am Keramikmonolithen 3 festgelegt.

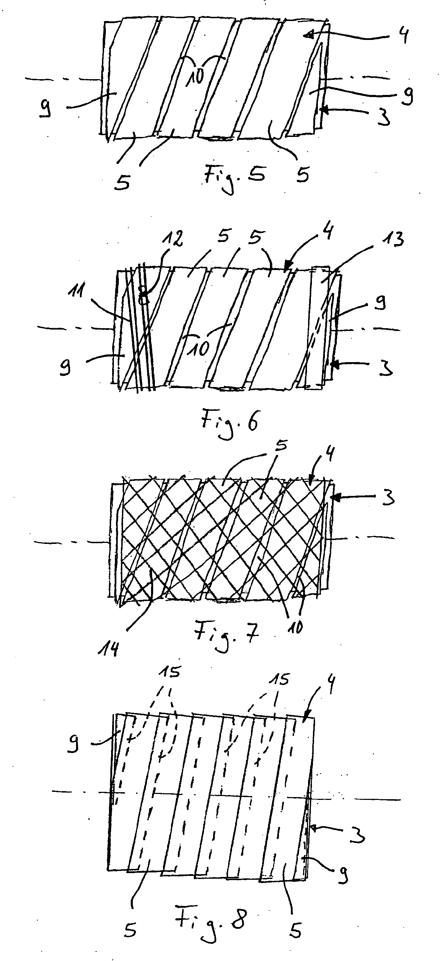

Gemäß Fig. 3 kann die Umhüllung des Keramikmonolithen 3 mit dem schnurförmigen Lagermaterial 4 so erfolgen, daß benachbarte Wicklungen 5 in axialer Richtung jeweils einen Abstand 10 voneinander aufweisen, solange der umwickelte Keramikmonolith 3 noch nicht in sein Blechgehäuse 2 eingesteckt bzw. darin untergebracht ist. Die Lücken oder Abstände 10 zwischen benachbarten Windungen 5 sind dabei auf den Durchmesser des schnurförmigen Lagermaterials 4 so abgestimmt, daß sich beim Einbringen des umhüllten Keramikmonolithen 4 in sein Blechgehäuse 2 eine Verpressung des Lagermaterials 4 ergibt, die ausreicht, die Lücken oder Abstände 10 entsprechend Fig. 4 zu schließen. Das Einbringen des umwickelten Keramikmonolithen 3 in sein Blechgehäuse 2 kann beispielsweise dadurch erfolgen, daß der umwickelte Keramikmonolith 3 mit Hilfe eines Trichters in das Blechgehäuse 2 eingeführt wird. Ebenso ist es möglich, das Blechgehäuse 2 zweischalig auszubilden, wobei die beiden Halbschalen nach dem Einsetzen des umwickelten Keramikmonolithen 3 miteinander verspannt werden.

Bei den Ausführungsformen der Fig. 2 bis 4 ist das Lagermaterial 4 schnurförmig ausgebildet und besitzt dementsprechend einen runden, insbesondere kreisförmigen oder elliptischen, Querschnitt. Im Unterschied dazu ist das Lagermaterial 4 in den Ausführungsformen der Fig. 5 bis 9 bandförmig ausgebildet und zeigt dementsprechend einen rechteckigen Querschnitt. Dabei ist das bandförmige Lagermaterial 4 als Flachband gestaltet, das heißt, die Breite des bandförmigen Lagermaterials 4 ist größer als seine Dicke.

Um das auf den Keramikmonolithen 3 aufgewickelte bandförmige Lagermaterial 4 besser an die Form des Keramikmonolithen 3 anpassen zu können, sind bei den Ausführungen der Fig. 5 bis 9 die Enden 9 des Lagermaterials 4 schräg abgeschnitten. Die Beschneidung der Enden 9 hängt dabei von der Steigung der Wicklungen 5 ab.

Zur Fixierung des Lagermaterials 4 am Keramikmonolithen 3 ist es beispielsweise möglich, die Enden 9 mit dem Keramikmonolithen 3 zu verkleben. Zusätzlich oder alternativ können die Enden 9 mit der benachbarten Wicklung 5 verklebt sein. Zur Erzielung einer derartigen Klebefixierung kann der Keramikmonolith 3 an seiner Außenseite vollständig oder zumindest im Bereich der Enden 9 des Lagermaterials 4 mit einer Klebschicht ausgestattet sein, auf die das Lagermaterial 4 dann aufgewickelt ist. Die Klebschicht kann beispielsweise durch einen aufgetragenen Klebstoff oder durch ein doppelseitig wirkendes Klebeband gebildet sein.

Gemäß Fig. 6 kann das aufgewickelte Lagermaterial 4 auch dadurch am Keramikmonolithen 3 fixiert werden, daß es zumindest im Bereich seines Endes 9 mit einer Fixierschnur 11 umwickelt ist. Die Fixierschnur 11 kann durch eine Klebstoffbeschichtung selbsthaftend ausgebildet sein. Ebenso ist es möglich, die Fixierschnur 11 mit einem Knoten 12 zu sichern. In Fig. 6 ist die Variante mit der Fixierung durch die Fixierschnur 11 links dargestellt, während rechts eine weitere Variante dargestellt ist, bei der das Lagermaterial 4 außen mit Hilfe eines Klebebands 13 fixiert ist. Zweckmäßig ist dieses Klebeband 13 zumindest im Bereich der Enden 9 auf das Lagermaterial 4 aufgewickelt.

Bei der Ausführungsform gemäß Fig. 7 wird zur Fixierung des Lagermaterials 4 am Keramikmonolithen 3 ein Fixiernetz 14 verwendet, welches das aufgewickelte Lagermaterial 4 umhüllt und mit dem Keramikmonolithen 3 verspannt.

Bei den Ausführungsformen der Fig. 5 bis 7 und 9 ist das bandförmige Lagermaterial 4 jeweils so auf den Keramikmonolithen 3 aufgewickelt, das benachbarte Wicklungen 5 seitlich aneinander stoßen. Die in den Darstellungen der Fig. 5 bis 7 und 9 zwischen den benachbarten Wicklungen 5 erkennbaren Lücken oder Abstände 10 sind so gewählt, daß sie sich beim Einsetzen des umwickelten Keramikmonolithen 3 in sein Blechgehäuse 2 schließen.

Im Unterschied dazu ist bei der Ausführungsform gemäß Fig. 8 das bandförmige Lagermaterial 4 so auf den Keramikmonolithen 3 aufgewickelt, daß sich für benachbarte Wicklungen 5 eine seitliche Überlappung ergibt. Die jeweils überlappten Abschnitte des Lagermaterials 4 sind in Fig. 8 mit 15 bezeichnet. Durch ihre Überlappung sichern sich die Wicklungen 5 gegenseitig am Keramikmonolithen 3. Des weiteren wird eine sichere Abdichtung des Keramikmonolithen 3 nach außen gewährleistet.

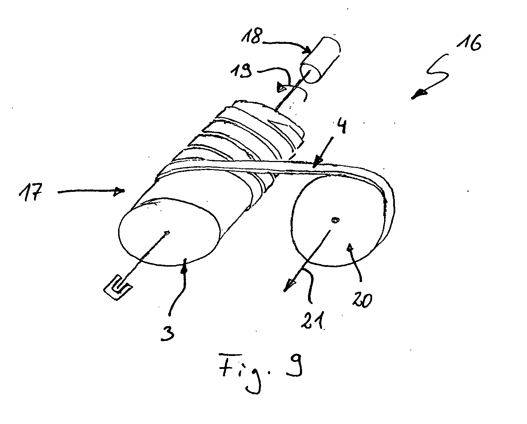

Entsprechend Fig. 9 umfaßt eine Vorrichtung 16 zum automatisierten Zusammenbau des Bauteils 1 zumindest eine Wickelstation 17, mit deren Hilfe das bandförmige oder schnurförmige Lagermaterial 4 automatisch schraubenförmig auf den Keramikmonolithen 3 aufgewickelt werden kann. Die Wickelstation 17 umfaßt beispielsweise eine Einrichtung 18 zum drehenden Antreiben des Keramikmonolithen 3, wobei dieser dann um seine Längsachse entsprechend einem Pfeil 19 rotiert. Das im Ausführungsbeispiel der Fig. 9 bandförmig ausgebildete Lagermaterial 4 wird dabei von einer Rolle 20 abgerollt, die durch eine, hier durch einen Pfeil symbolisierte Vorschubeinrichtung 21 entsprechend dem Wicklungsvorgang parallel zur Längsachse des Keramikmonolithen 3 verstellt wird. Das Aufwickeln des Lagermaterials 4 auf den Keramikmonolithen 3 kann daher automatisch durchgeführt werden, wodurch es möglich ist, für das Lagermaterial 4 eine bindungsmittelfreie Variante zu verwenden.

Die Bevorratung und Bereitstellung des Lagermaterials 4 für den Zusammenbau der Bauteile 1 wird vereinfacht, da das Lagermaterial 4 im Ausgangszustand in Form der Rolle 20 (bei einem bandförmigen Lagermaterial 4) oder in Form einer Spule (bei einem schnurförmigen Lagermaterial 4) bereitgestellt werden kann. Zweckmäßig ist auf eine derartige Rolle 20 bzw. Spule mehr Lagermaterial 4 aufgewickelt als zum Umhüllen eines einzelnen Keramikmonolithen 3 erforderlich ist. Die Serienherstellung der Bauteile 1 wird dadurch erleichtert.

Über die Rolle 20 bzw. die Spule wird das Lagermaterial 4 quasi als Endlosmaterial zugeführt und bedarfsabhängig vor oder nach dem Aufwickeln auf den Keramikmonolithen 3 passend abgelängt.

### Bezugszeichenliste

- 1: Bauteil/Katalysator/Partikelfilter
- 2: Blechgehäuse
- 3: Keramikmonolith
- 4: Lagermaterial
- 5: Wicklung
- 6: Mantel von 3
- 7: Stirnseite von 3
- 8: Stirnseite von 3
- 9: Ende von 4
- 10: Abstand/Lücke
- 11: Fixierschnur
- 12: Knoten
- 13: Klebeband
- 14: Fixiernetz
- 15: überlappter Bereich von 5
- 16: Vorrichtung
- 17: Wickelstation
- 18: Einrichtung
- 19: Drehrichtungspfeil
- 20: Rolle
- 21: Vorschubeinrichtung

## Patentansprüche

1. Lagermaterial zum Umhüllen eines Keramikmonolithen (3) zu dessen Lagerung in einem Blechgehäuse (2), insbesondere bei einem Katalysator oder bei einem Partikelfilter, wobei das Lagermaterial (4) bandförmig oder schnurförmig ausgebildet und im Querschnitt so dimensioniert ist, das es zum Umhüllen des Keramikmonolithen (3) mit mehreren Windungen (5) schraubenförmig auf diesen aufwickelbar ist.

2. Lagermaterial nach Anspruch 1,
**dadurch gekennzeichnet,**
**daß** das Lagermaterial (4) im Ausgangszustand in Form einer Spule oder einer Rolle (20) bereitgestellt ist, wobei im Ausgangszustand mehr Lagermaterial (4) auf die Rolle (20) oder auf die Spule aufgewickelt ist als zum Umhüllen eines Keramikmonolithen (3) erforderlich ist.

3. Lagermaterial nach Anspruch 1 oder 2,
**dadurch gekennzeichnet,**
**daß** das bandförmige Lagermaterial (4) durch Zuschnitt aus einer Quellmaterialbahn oder aus einer Keramikfaserbahn hergestellt ist.

4. Lagermaterial nach einem der Ansprüche 1 bis 3,
**dadurch gekennzeichnet,**
**daß** das schnurförmige Lagermaterial (4) durch Flechten aus Keramikfaserfilamenten hergestellt ist.

5. Bauteil für eine Abgasanlage einer Brennkraftmaschine, insbesondere Katalysator oder Partikelfilter, mit einem in ein Blechgehäuse (2) eingesetztem Keramikmonolithen (3), der zu seiner Lagerung im Blechgehäuse (2) mit einem Lagermaterial (4) umhüllt ist, wobei das Lagermaterial (4) bandförmig oder schnurförmig ausgebildet und im Querschnitt so dimensioniert ist, daß es zum Umhüllen des Keramikmonolithen (3) mit mehreren Windungen (5) schraubenförmig auf diesen gewikkelt ist.

6. Bauteil nach Anspruch 5,
**dadurch gekennzeichnet,**
**daß** das Lagermaterial (4) am Keramikmonolithen (3) dadurch fixiert ist
- **daß** die Enden (9) des Lagermaterials (4) mit dem Keramikmonolithen (3) und/oder mit der benachbarten Wicklung (5) verklebt sind, und/oder
- **daß** die Enden (9) des Lagermaterials (4) unter der benachbarten Wicklung (5) durchgezogen und von dieser am Keramikmonolithen (3) festgelegt sind, und/oder
- **daß** die Enden (9) des Lagermaterials (4) mit einem außen angebrachten Klebeband (13) an der benachbarten Wicklung (5) befestigt sind, und/oder
- **daß** das Lagermaterial (4) zumindest im Bereich seiner Enden (9) außen mit einer Fixierschnur (11) umwickelt ist,
- **daß** das Lagermaterial (4) zumindest im Bereich seiner Enden (9) außen mit einem Klebeband (13) umwickelt ist, und/oder
- **daß** das Lagermaterial (4) außen von einem Fixiernetz (14) umhüllt und damit mit dem Keramikmonolithen (3) verspannt ist, und/oder
- **daß** der Keramikmonolith (3) zumindest im Bereich der Enden (9) des Lagermaterials (4) außen eine durch Klebstoff oder doppelseitiges Klebeband gebildete Klebschicht aufweist, auf die das Lagermaterial (4) aufgewickelt ist.

7. Bauteil nach Anspruch 5 oder 6,
**dadurch gekennzeichnet,**
**daß** das bandförmige Lagermaterial (4) so auf den Keramikmonolithen (3) aufgewickelt ist, daß sich benachbarte Wicklungen (5) gegenseitig überlappen.

8. Bauteil nach einem der Ansprüche 5 bis 7,
**dadurch gekennzeichnet,**
**daß** die Enden (9) des Lagermaterials (4) entsprechend der Steigung der Wicklungen (5) schräg beschnitten sind.

9. Bauteil nach einem der Ansprüche 5 bis 8, **gekennzeichnet durch** die kennzeichnenden Merkmale des Anspruchs 3 oder 4.

10. Verfahren zum Zusammenbauen eines Bauteils (1), insbesondere eines Katalysators oder eines Partikelfilters, für eine Abgasanlage einer Brennkraftmaschine,
- bei dem ein Keramikmonolith (3) des Bauteils (1) mit einem bandförmigen oder schnurförmigen Lagermaterial (4) schraubenförmig mit mehreren Windungen (5) umwickelt wird,
- bei dem der mit dem Lagermaterial (4) umhüllte Keramikmonolith (3) in ein Blechgehäuse (2) des Bauteils (1) eingesetzt wird.

11. Verfahren nach Anspruch 10,
**dadurch gekennzeichnet,**
**daß** das Lagermaterial (4) von einer Rolle (20) oder von einer Spule als Endlosmaterial oder quasi als Endlosmaterial zugeführt wird.

12. Vorrichtung zum automatisierten Zusammenbauen eines Bauteils (1), insbesondere eines Katalysators oder eines Partikelfilters, für eine Abgasanlage einer Brennkraftmaschine, mit einer Wickelstation (17) zum automatischen schraubenförmigen Aufwickeln eines bandförmigen oder schnurförmigen Lagermaterials (4) auf einen Keramikmonolithen (3) des Bauteils (1).
